# EUROPÄISCHE PATENTSCHRIFT

(11) **EP 1 194 987 B1**
(45) Veröffentlichungstag und Bekanntmachung des Hinweises auf die Patenterteilung: **19.03.2003**
(21) Anmeldenummer: 00943454.9
(22) Anmeldetag: 26.06.2000
(51) Int. Cl.: H01S 3/098

(54) **LASERVORRICHTUNG**
LASER DEVICE
DISPOSITIF LASER

(30) Priorität: 07.07.1999 AT 115999
(43) Veröffentlichungstag der Anmeldung: 10.04.2002
(73) Patentinhaber: Femtolasers Produktions GmbH, 2100 Korneuburg (AT)
(72) Erfinder: FÜRBACH, Alexander, A-1020 Wien (AT); KRAUSZ, Ferenc, A-2331 Vösendorf (AT)
(74) Vertreter: Weinzinger, Arnulf, Dipl.-Ing.
(86) Internationale Anmeldenummer: AT0000173
(87) Internationale Veröffentlichungsnummer: WO01005002

(56) Entgegenhaltungen:
- WO-A-98/22995
- BOCZAR B P ET AL: "New scheme for ultrashort-pulsed Nd/sup 3+/:YAG laser operation: a branched cavity, internally seeded regenerative amplifier" APPLIED OPTICS, 1 JUNE 1983, USA, Bd. 22, Nr. 11, Seiten 1611-1613, XP002150826 ISSN: 0003-6935
- TURI ET AL: "DIODE-PUMPED ND:YLF ALL-IN-ONE LASER" OPTICS LETTERS,US,OPTICAL SOCIETY OF AMERICA, WASHINGTON, Bd. 20, Nr. 14, 15. Juli 1995 (1995-07-15), Seiten 1541-1543, XP000514995 ISSN: 0146-9592 in der Anmeldung erwähnt

## Beschreibung

Die Erfindung betrifft eine Laservorrichtung mit einer Pumpeinheit, die einen gepumpten Laserkristall enthält, und mit einer Einrichtung zur passiven Modenverkopplung.

Derartige Laservorrichtungen werden insbesondere als Kurzpuls-Laservorrichtungen vorgesehen, wobei im modenverkoppelten Zustand kurze Laserpulse mit hoher Energie erzeugt werden. Diese Kurzpuls-Laservorrichtungen werden mit Vorteil für Präzisions-Materialbearbeitungen oder aber für wissenschaftliche Arbeiten eingesetzt. Hinsichtlich der Erzeugung von kurzen Laserimpulsen kann beispielsweise auf die allgemeinen Ausführungen in der WO 98/10494 A sowie in A. Stingl et al.: Generation of 11-fs pulses from a Ti:sapphire laser without the use of prisms; Optics Letters Vol. 19, Nr. 3, 1. Februar 1994, S. 204-206 verwiesen werden.

Die Standardtechnik zur Erzeugung von kurzen Laserimpulsen mit hoher Energie beruht auf der Technik eines Laseroszillators und eines Laserverstärkers. Der Laseroszillator erzeugt eine Folge von kurzen Laserimpulsen mit niedriger Energie, beispielsweise mit einer Wiederholungsfrequenz im Bereich von einigen zehn MHz. Aus diesen Oszillatorimpulsen werden Impulse mit einer niedrigeren Wiederholungsfrequenz selektiert und in einem regenerativen oder sog. Multipass-Verstärker zu Impulsen mit hoher Energie verstärkt.

Bevorzugt wird ein "all-in-one"-Konzept angewandt, bei dem nur ein Laser vorgesehen ist, welcher sowohl als Oszillator als auch als regenerativer Verstärker eingesetzt wird, indem einfach die Pulsformung (bei niedrigen Energien) einerseits und die Verstärkung (auf hohe Energien) andererseits zu verschiedenen Zeiten vorgenommen werden. Bekannte Laservorrichtungen dieser Art (vgl. z.B. L. Turi, T. Juhasz: Diode-pumped Nd:YLF all-in-one laser; Optics Letters Vol. 20, Nr. 14, 15. Juli 1995, S. 1541-1543), mit einem Laser sowohl für die Oszillatorfunktion als auch für die Verstärkerfunktion, setzen aktive Modenverkopplung mit einem akusto-optischen Modulator ein. Da die aktive Modenverkopplung nicht sehr effizient ist, ist die erreichbare Mindestimpulsdauer relativ groß, und überdies ist für einen zuverlässigen Langzeitbetrieb eine aufwendige Elektronik zur Zeitsteuerung bzw. Stabilisierung erforderlich.

Andererseits ist es an sich, wie sich aus dem vorstehend genannten Dokument WO 98/10494 A ergibt, bei Laservorrichtungen allgemein bekannt, eine passive Modenverkopplung, insbesondere auch mit einem sättigbaren Absorber, auszubilden. Andere Möglichkeiten zum passiven Modenverkoppeln sind beispielsweise die Ausnutzung des Kerreffekts (sog. "Kerr-lens modelocking", KLM), der Einsatz von nichtlinearen Spiegeln ("nonlinear mirror mode-locking", NLM), die Anwendung einer nichtlinearen Polarisationsdrehung in optischen Kristallen oder kaskadierte nichtlineare Prozesse zweiter Ordnung.

Aus dem Artikel Boczar B.P. et al.: New scheme for ultrashort-pulsed Nd/sup 3+/:YAG laser operation: a branched cavity, internally seeded regenerative amplifier; Applied optics, 1 June 1983, USA, Bd.22, Nr.11, Seiten 1611-1613, ist eine Laservorrichtung bekannt, bei der der Resonator zwei Arme umfasst, die passive Komponenten enthalten, die Verlust einführen, und die gleichzeitig als Resonator genutzt werden.

Es ist nun Aufgabe der Erfindung, eine Laservorrichtung der eingangs angeführten Art vorzusehen, die bei Verwendung einer passiven Modenverkopplung eine all-in-one-Bauweise des Lasers ermöglicht, wobei dann der Vorteil ausgenutzt wird, dass eine passive Modenverkopplung eine viel stärkere Amplitudenmodulation bewirkt als eine aktive Modenverkopplung und stabile Kurzimpulse im Piko- oder Femtosekundenbereich, also mit Impulsdauern nahe dem möglichen unteren Grenzwert, der durch die endliche Verstärkungsbandbreite des verwendeten Lasermaterials gegeben ist, erzeugt werden können. Dabei ist auch das Problem zu lösen, dass passive Modenverkoppler wie sättigbare Absorber andererseits eine obere Grenze bei der Erhöhung der Energie, zufolge ihres niedrigen Zerstörungs-Schwellenwerts, ergeben und überdies bei einer übermäßigen Sättigung des Absorbers auch Instabilitäten bewirkt werden. Die Erfindung basiert nun auf dem Gedanken, den Resonator auf zwei zu verschiedenen Zeiten wirksame, unterschiedliche Unterresonatoren aufzuteilen, wobei die Unterresonatoren die verschiedenen Aufgaben, nämlich einerseits die Impulsformung unter Verwendung der passiven Modenverkopplung, mit hohen Resonatorverlusten entsprechend den niedrigen Leistungspegeln, und andererseits die Verstärkung auf hohe Impulsenergien vorsehen.

Die erfindungsgemäße Laservorrichtung der eingangs angeführten Art ist demgemäß dadurch gekennzeichnet, dass zwei gesonderte, alternativ schaltbare Resonatorarme vorgesehen sind, von denen der eine, der für eine Pulsformphase verantwortlich ist, die Einrichtung zur passiven Modenverkopplung enthält, wogegen der andere Resonatorarm, der für eine Verstärkungsphase verantwortlich ist, frei von Verluste einführenden Komponenten ' ist. Bei der vorliegenden Laservorrichtung werden somit zu verschiedenen Zeiten unterschiedliche Resonatorteile eingesetzt, wobei in der einen Phase, wenn die kurzen Laserimpulse mit niedriger Energie erzeugt werden, der eine Resonatorarm mit der Einrichtung zur passiven Modenverkopplung in Funktion ist, wobei hohe Resonatorverluste entsprechend den niedrigen Leistungswerten gegeben sind; nach der Impulsformung wird der Resonator umgeschaltet, so dass der andere Resonatorarm in Funktion tritt, wobei die Einrichtung zur passiven Modenverkopplung nicht mehr im Resonator vorliegt, und es wird eine Verstärkung auf hohe Impulsenergien im Hinblick auf die hohe Resonatorgüte des nunmehrigen Resonators ermöglicht.

Zweckmäßigerweise wird zur Umschaltung die Polarisation des Laserstrahls ausgenützt, und demgemäß kann für eine einfache Ausbildung der Laservorrichtung vorgesehen sein, dass zur Umschaltung zwischen den beiden Resonatorarmen zumindest ein polarisationsempfindlicher Strahlteiler sowie ein Polarisationsdreher vorgesehen sind. Dabei dient als Polarisationsdreher vorzugsweise eine Pockelszelle; eine derartige Pockelszelle kann elektrisch angesteuert werden, um einen hindurchgehenden Laserstrahl in seiner Polarisationsrichtung - um 90° - zu verdrehen. Zusammen mit einem entsprechenden polarisationsempfindlichen Strahlteiler kann daher der Laserstrahl nach dieser Umschaltung in den anderen Resonatorarm geleitet werden.

Von besonderem Vorteil ist es auch, wenn im Pfad des Laserstrahls auf beiden Seiten des Polarisationsdrehers je ein polarisationsempfindlicher Strahlteiler angeordnet ist. Dabei kann der auf der von der Einrichtung zur passiven Modenverkopplung abgewandten Seite des Polarisationsdrehers vorgesehene polarisationsempfindliche Strahlteiler ein Laserstrahl-Auskoppelelement bilden, um die verstärkten Laserimpulse auszukoppeln.

Als Einrichtung zur passiven Modenverkopplung wird bevorzugt wie an sich bekannt ein sättigbarer Absorber eingesetzt.

Der sättigbare Absorber kann vorteilhafterweise ein an sich bekannter sättigbarer Halbleiterabsorber sein.

Ferner ist es für eine kompakte, effiziente Resonatorausbildung auch günstig, wenn der sättigbare Absorber ein den einen Resonatorarm abschließender Absorber-Spiegel, insbesondere auf Halbleiterbasis, ist.

Um während der Pulsformphase im Laserstrahl die gewünschten Verluste einzuführen, ist es auch zweckmäßig, im einen, in der Pulsformphase aktiven Resonatorarm ein lineares Verlustelement, z.B. ein λ/4-Plättchen, anzuordnen, das eine hohe Energieakkumulation im Laserkristall vorsieht.

Für die Ausbildung der Laservorrichtung als all-in-one-Lasersystem ist es schließlich noch günstig, wenn die Pumpeinheit eine Dauerstrich-Dioden-Pumpeinheit ist und zusammen mit dem Polarisationsdreher einen Resonatorteil bildet, der beiden Resonatorarmen gemeinsam ist. Weiters ist es vorteilhaft, wenn die Pumpeinheit lampen- bzw. lasergepumpt ist und zusammen mit dem Polarisationsdreher einen beiden Resonatorarmen gemeinsamen Resonatorteil bildet.

Die Erfindung wird nachfolgend anhand eines in der Zeichnung veranschaulichten bevorzugten Ausführungsbeispieles, auf das sie jedoch nicht beschränkt sein soll, noch weiter erläutert. Es zeigen:
Fig.1 schematisch eine Kurzpuls-Laservorrichtung nach der all-in-one-Bauweise; und
Fig.2 ein zugehöriges Diagramm.

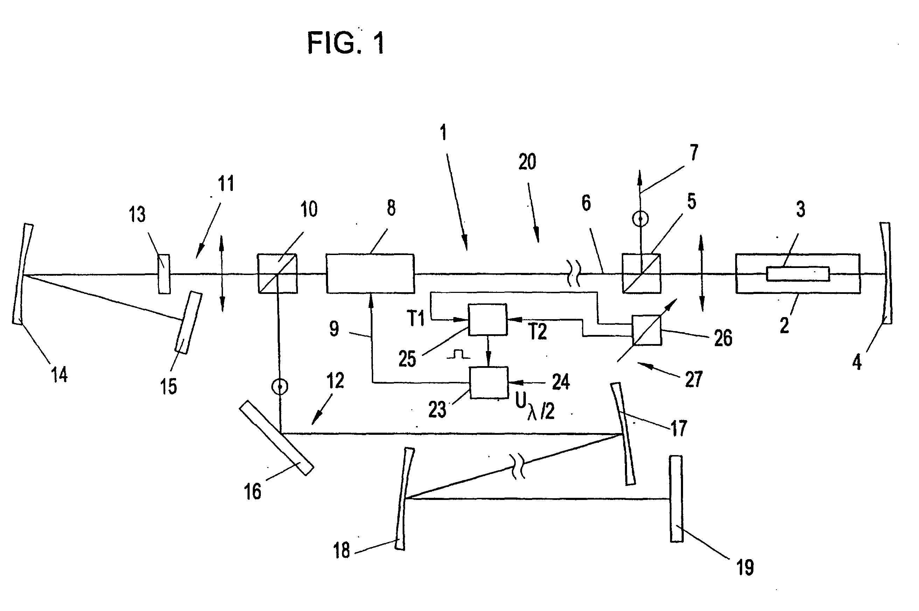

In der Zeichnung ist in Fig.1 eine allgemein mit 1 bezeichnete all-in-one-Kurzpuls-Laservorrichtung dargestellt, die eine Pumpeinheit 2 enthält, die einen nur schematisch angedeuteten diodengepumpten Laserkristall 3 enthält. Auf der einen Seite dieser Pumpeinheit 2 ist ein Resonator-Endspiegel 4 vorgesehen.

Auf der anderen Seite der Pumpeinheit 2 ist ein polarisationsempfindlicher Strahlteiler 5 vorgesehen, der zugleich ein Auskoppelelement für den verstärkten Laserstrahl 6 bildet, wie mit einem Pfeil 7 schematisch angedeutet ist. Der Laserstrahl 6 gelangt während seines Umlaufs im gezeigten Resonator zu einem Polarisationsdreher in Form einer Pockelszelle 8, die bei 9 in an sich bekannter und daher nachstehend nur kurz näher erläuterter Weise elektrisch angesteuert werden kann, um die Polarisation des Laserstrahls 6 um 90° zu verdrehen.

Im Weg des Laserstrahls 6 folgt sodann ein weiterer polarisationsempfindlicher Strahlteiler 10, welcher je nach Polarisation des Laserstrahls 6 den Laserstrahl 6 durchlässt (und zwar in einen Laser-Resonatorarm 11) oder aber reflektiert (und zwar in einen anderen Laser-Resonatorarm 12). In Fig.1 ist schematisch die Polarisation des Laserstrahls 6 in dem einen Resonatorarm 11 mit einem Doppelpfeil und in dem anderen Resonatorarm 12 durch einen Punkt im Kreis angedeutet, wobei der Doppelpfeil anzeigt, dass die Polarisationsrichtung in der Zeichenebene liegt, wogegen der Punkt im Kreis, für den anderen Resonatorarm 12, angibt, dass die Polarisationsrichtung des Laserstrahls 6 senkrecht zur Zeichenebene verläuft.

In dem einen Resonatorarm 11 folgt im Weg des Laserstrahls 6 sodann ein λ/4-Plättchen 13, das die erforderlichen Verluste im Laserstrahl 6 einführt, wonach der Laserstrahl 6 von einem Spiegel 14 zu einem sättigbaren Halbleiter-Absorber-Spiegel 15 reflektiert wird, der als Einrichtung zur passiven Modenverkopplung vorgesehen ist. Derartige sättigbare Halbleiter-Absorber-Spiegel sind an sich bekannt, so dass sich eine weitere Erläuterung erübrigen kann.

In dem anderen Resonatorarm 12 wird der Laserstrahl 6 zur Erzielung der erforderlichen Weglänge über vier Spiegel 16 bis 19 geführt, wobei die Spiegel 17 und 18 sphärische Fokussierspiegel sind, wogegen die Spiegel 16 und 19 hochreflektierende ebene Spiegel sind.

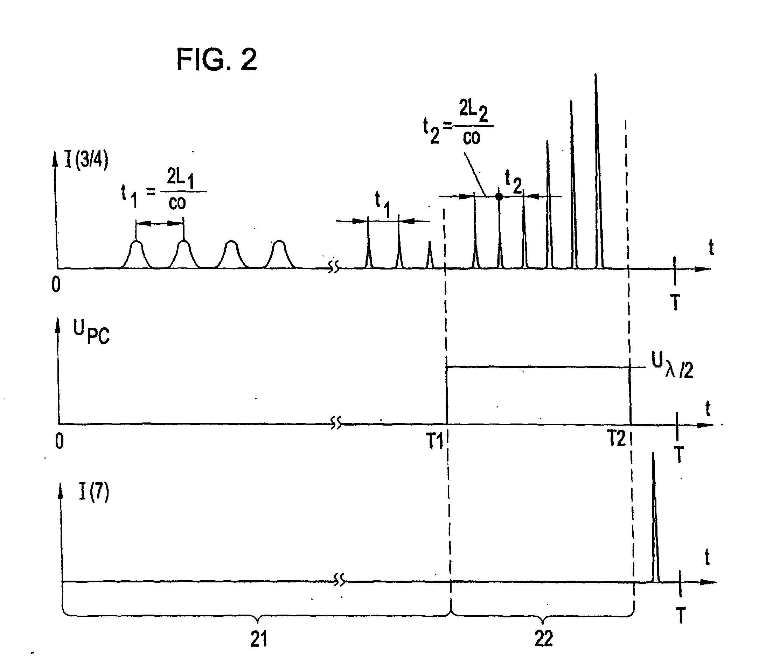

Wie ersichtlich bilden somit die Elemente 4, 2, 3, 5, 8 einen gemeinsamen Resonatorteil 20, der je nach Polarisationsrichtung des Laserstrahls 6 am Strahlteiler 10 dann entweder durch den einen Resonatorarm 11 oder aber durch den anderen Resonatorarm 12 ergänzt wird, um den gesamten Laser-Resonator zu bilden. Der eine Laser-Resonator, mit der Länge L1, ist somit durch die Elemente 4, 2, 3, 5, 8, 10, 13, 14 und 15 gebildet, und er ist für die Pulsaufbauphase (Pulsformphase) 21 (s. Fig.2) verantwortlich; der andere Resonator, mit der Länge L2, ist dagegen durch die Elemente 4, 2, 3, 5, 8, 10, 16, 17, 18 und 19 gebildet und für die Verstärkung (Verstärkungsphase 22 in Fig.2) zuständig.

In der Pulsformphase 21, in der keine Spannung an die Pockelszelle 8 angelegt wird, ist wie erwähnt der eine Resonatorarm 11 wirksam. Die beiden Strahlteiler 5 und 10 lassen den Laserstrahl 6 durch, da dieser zu dieser Zeit linear in der Zeichenebene polarisiert ist, vgl. die Doppelpfeile benachbart den beiden Strahlteilern 5 und 10. Das λ/4-Plättchen 13 wird eingestellt, um hohe Verluste in das System einzuführen und so den Leistungspegel im Resonator 20-11 niedrig zu halten und eine hohe Inversion im Laserkristall 3 zu bewirken. Da sich in dem einen Resonatorarm 11 der sättigbare Absorberspiegel 15 befindet, entwickeln sich die gewünschten kurzen Laserimpulse. Dies ist in Fig.2 in der oberen Diagrammzeile gezeigt, in der die Impulsintensität I(3/4), gemessen an einer Stelle zwischen der Pumpeinheit 2 mit dem Laserkristall 3 und dem Endspiegel 4, aufgetragen ist; wie ersichtlich werden die Impulse, deren Abstand t₁ = 2L1/c₀ (mit c₀ = Laserstrahlgeschwindigkeit) beträgt, zunehmend kürzer.

Um dann auf die Verstärkungsphase 22 umzuschalten, wird von einer an sich üblichen Steuerelektronik eine durch die jeweilige Pockelszelle 8 vorgegebene λ/2-Spannung U_{λ/2} (vgl. auch die 2. Zeile in Fig.2, die den Verlauf der Spannung U_{PC} an der Pockelszelle 8 abhängig von der Zeit t zeigt) bei 9 an die Pockelszelle 8 angelegt. Diese Ansteuerung muss zu einem Zeitpunkt T1 erfolgen, zu dem sich der Laserimpuls, der im Resonator umläuft, gerade gemäß der Darstellung in Fig.1 auf der rechten Seite der Pockelszelle 8 befindet, also im Bereich des Strahlteilers 5 bzw. der Pumpeinheit 2 bzw. des Endspiegels 4. In der Regel enthält eine Pockelszelle bereits eine Treiberschaltung, in der derartige Zeiten eingestellt werden können. In Fig.1 ist daher nur schematisch ein schneller Hochspannungsschalter 23 gezeigt, dem bei 24 eine Hochspannung U_{λ/2} zugeführt wird, und dem eine Schaltung 25 zur Erzeugung eines elektrischen Impulses zum Schalten des Hochspannungsschalters 23 bzw. der Pockelszelle 8 zu den Zeitpunkten T1 bzw. T2 zugeordnet ist. In Fig.1 ist noch schematisch ein von außen verstellbares Zeitsteuerglied 26 veranschaulicht, um die Einstellung der Zeiten T1, T2 damit anzudeuten. Die Elemente 23 bis 26 bilden somit eine elektronische Steuereinheit, die in Fig.1 mit 27 angedeutet ist, und die zur Umschaltung des Laserstrahls über die Pockelszelle 8 vorgesehen ist.

Wenn dann der Laserimpuls zur Pockelszelle 8 gelangt, wird aufgrund von deren Ansteuerung zum Zeitpunkt T1 (s. auch Fig.2) die Polarisation um 90° verdreht, so dass sie senkrecht zur Zeichenebene verläuft. Der Laserimpuls wird daher vom Strahlteiler 10 nicht mehr zu dem einen, für die Pulsformphase 21 vorgesehenen Resonatorarm 11 durchgelassen, sondern zum anderen Resonatorarm 12 reflektiert, wobei er das System mit den Spiegeln 16 bis 19 durchläuft und schließlich vom Strahlteiler 10 wieder zurück zur Pockelszelle 8 reflektiert - und dort neuerlich um 90° in der Polarisation verdreht - wird. Da in diesem anderen Resonatorarm 12 keine Elemente, die Verluste einführen, enthalten sind, wird die Energie des Laserimpulses mit jedem Umlauf rasch erhöht, vgl. auch Fig.2, erste Diagrammzeile, Verlauf der Impulsintensität I(3/4).

Wenn die Impulsenergie ihren Sättigungswert erreicht, wird die Pockelszelle 8 abgeschaltet. Dieses Abschalten erfolgt zu einem Zeitpunkt T2, zu dem sich der Laserimpuls auf der linken Seite der Pockelszelle 8, also im anderen, für die Verstärkungsphase 22 vorgesehenen Resonatorarm 12, befindet. Wenn nun der Laserstrahl 6 die Pockelszelle 8 von links kommend durchläuft, wird die Polarisation nicht mehr um 90° verdreht (nämlich wieder in die Zeichenebene), da die Spannung U_{λ/2} nun bereits von der Pockelszelle 8 abgeschaltet wurde (d.h. die Spannung U_{PC} an der Pockelszelle 8 beträgt wieder 0 V); der Laserimpuls wird, da die Polarisation jetzt senkrecht zur Zeichenebene geblieben ist, durch Reflexion am Strahlteiler 5 ausgekoppelt, vgl. den Pfeil 7, anstatt zur Pumpeinheit 2 durchgelassen zu werden. Dieser verstärkte Ausgangsimpuls ist in der dritten Diagrammzeile von Fig.2, für die Intensität I(7) des Impulses beim Auskoppeln, s. Pfeil 7 in Fig.1, veranschaulicht.

Beim beschriebenen System bleibt die Polarisation innerhalb des Laserkristalls 3 immer dieselbe (nämlich gemäß Darstellung in Fig.1 in der Zeichenebene), so dass jedes beliebige Lasermedium verwendet werden kann, ohne dass auf eine polarisationsabhängige Verstärkung Rücksicht zu nehmen wäre.

## Patentansprüche

1. Laservorrichtung (1) mit einer Pumpeinheit (2), die einen gepumpten Laserkristall (3) enthält, und mit einer Einrichtung (15) zur passiven Modenverkopplung, **dadurch gekennzeichnet, dass** zwei gesonderte, alternativ schaltbare Resonatorarme (11, 12) vorgesehen sind, von denen der eine Resonatorarm (11), der für eine Pulsformphase (21) verantwortlich ist, die Einrichtung (15) zur passiven Modenverkopplung enthält, wogegen der andere Resonatorarm (12), der für eine Verstärkungsphase (22) verantwortlich ist, frei von Verluste einführenden Komponenten ist.

2. Laservorrichtung nach Anspruch 1, **dadurch gekennzeichnet, dass** zur Umschaltung zwischen den beiden Resonatorarmen (11, 12) zumindest ein polarisationsempfindlicher Strahlteiler (10) sowie ein Polarisationsdreher (8) vorgesehen sind.

3. Laservorrichtung nach Anspruch 2, **dadurch gekennzeichnet, dass** der Polarisationsdreher (8) durch eine Pockelszelle gebildet ist.

4. Laservorrichtung nach Anspruch 2 oder 3, **dadurch gekennzeichnet, dass** im Pfad des Laserstrahls (6) auf beiden Seiten des Polarisationsdrehers (8) je ein polarisationsempfindlicher Strahlteiler (10, 5) angeordnet ist.

5. Laservorrichtung nach Anspruch 4, **dadurch gekennzeichnet, dass** der polarisationsempfindliche Strahlteiler (5) auf der von der Einrichtung (15) zur passiven Modenverkopplung abgewandten Seite des Polarisationsdrehers (8) zugleich ein Laserstrahl-Auskoppelelement bildet.

6. Laservorrichtung nach einem der Ansprüche 1 bis 5, **dadurch gekennzeichnet, dass** die Einrichtung zur passiven Modenverkopplung ein sättigbarer Absorber (15) ist.

7. Laservorrichtung nach Anspruch 6, **dadurch gekennzeichnet, dass** der sättigbare Absorber (15) ein sättigbarer Halbleiterabsorber ist.

8. Laservorrichtung nach Anspruch 6 oder 7, **dadurch gekennzeichnet, dass** der sättigbare Absorber (15) ein den einen Resonatorarm (11) abschließender Absorber-Spiegel ist.

9. Laservorrichtung nach einem der Ansprüche 1 bis 8, **dadurch gekennzeichnet, dass** im einen, für die Pulsformphase (21) verantwortlichen Resonatorarm (11) ein lineares Verlustelement, z.B. ein λ/4-Plättchen, (13) angeordnet ist, das eine hohe Energieakkumulation im Laserkristall (3) vorsieht.

10. Laservorrichtung nach einem der Ansprüche 2 bis 9, **dadurch gekennzeichnet, dass** die Pumpeinheit (2) eine Dauerstrich-Dioden-Pumpeinheit ist und zusammen mit dem Polarisationsdreher (8) einen beiden Resonatorarmen (11, 12) gemeinsamen Resonatorteil (20) bildet.

11. Laservorrichtung nach einem der Ansprüche 2 bis 10, **dadurch gekennzeichnet, dass** die Pumpeinheit (2) lampen- bzw. lasergepumpt ist und zusammen mit dem Polarisationsdreher (8) einen beiden Resonatorarmen (11, 12) gemeinsamen Resonatorteil (20) bildet.

## Claims

1. A laser arrangement (1) comprising a pump unit (2) containing a pumped laser crystal (3), and further comprising means (15) for passive mode-locking, **characterized in that** two separate, alternatively switchable resonator arms (11, 12) are provided, one resonator arm (11) of which, which is responsible for a pulse forming phase (21), comprises the means (15) for passive mode-locking, whereas the other resonator arm (12), which is responsible for an amplifying phase (22), is free from components that introduce losses.

2. A laser arrangement according to claim 1, **characterized in that** at least one polarization-sensitive beam divider (10) as well as a polarization rotating means (8) is provided for switching between the two resonator arms (11, 12).

3. A laser arrangement according to claim 2, **characterized in that** the polarization rotating means (8) is formed by a Pockels cell.

4. A laser arrangement according to claim 2 or 3, **characterized in that** a respective polarization-sensitive beam divider (10, 5) is provided in the path of the laser beam (6) on both sides of the polarization rotating means (8).

5. A laser arrangement according to claim 4, **characterized in that** the polarization-sensitive beam divider (5) positioned on the side of the polarization-rotating means (8) opposite to the means (15) for passive mode-locking, simultaneously forms a laser beam-outcoupling element.

6. A laser arrangement according to any one of claims 1 to 5, **characterized in that** the means for passive mode-locking is a saturable absorber (15).

7. A laser arrangement according to claim 6, **characterized in that** the saturable absorber (15) is a saturable semiconductor absorber.

8. A laser arrangement according to claim 6 or 7, **characterized in that** the saturable absorber (15) is an absorber mirror terminating the one resonator arm (11).

9. A laser arrangement according to any one of claims 1 to 8, **characterized in that** in the one resonator arm (11) which is active in the pulse forming phase (21), a linear loss element, e.g. a λ/4 platelet (13), is arranged which provides for a high energy accumulation in the laser crystal (3).

10. A laser arrangement according to any one of claims 2 to 9, **characterized in that** the pump unit (2) is a continuous wave diode pump unit forming, in combination with the polarization rotating means (8), a resonator part (20) common to both resonator arms (11, 12).

11. A laser arrangement according to any one of claims 2 to 10, **characterized in that** the pump unit (2) is lamp-pumped, or laser-pumped, respectively, forming, in combination with the polarization rotating means (8), a resonator part (20) common to both resonator arms (11, 12).

## Revendications

1. Dispositif laser (1) comportant une unité de pompage (2), qui contient un cristal laser pompé (3), et un dispositif (15) pour réaliser un couplage passif de mode, **caractérisé en ce qu'**il est prévu deux bras de résonateur séparés (11,12), pouvant être commutés alternativement, parmi lesquels un bras de résonateur (11), qui est responsable d'une phase de forme d'impulsions (21), contient le dispositif (15) pour réaliser le couplage passif de mode, tandis que l'autre bras de résonateur (12), qui est responsable d'une phase d'amplification (22), est exempt de composants introduisant des pertes.

2. Dispositif laser selon la revendication 1, **caractérisé en ce que** pour la commutation entre les deux bras de résonateur (11,12) il est prévu au moins un diviseur de faisceau (10) sensible à la polarisation ainsi qu'un dispositif de rotation de polarisation (8).

3. Dispositif laser selon la revendication 2, **caractérisé en ce que** le dispositif de rotation de polarisation (8) est formé par une cellule de Pockels.

4. Dispositif laser selon la revendication 2 ou 3, **caractérisé en ce qu'**un diviseur de faisceau (10,5) sensible à la polarisation est disposé respectivement dans le trajet du faisceau laser (6) des deux côtés du dispositif de rotation de polarisation (8).

5. Dispositif laser selon la revendication 4, **caractérisé en ce que** le diviseur de faisceau (5) sensible à la polarisation situé sur le côté du dispositif de rotation de polarisation (8), tourné à l'opposé du dispositif (15) prévu pour le couplage passif de mode, forme simultanément un élément de découplage pour le faisceau laser.

6. Dispositif laser selon l'une des revendications 1 à 5, **caractérisé en ce que** le dispositif pour le couplage passif de mode est un absorbeur saturable (15).

7. Dispositif laser selon la revendication 6, **caractérisé en ce que** l'absorbeur saturable (15) est un absorbeur saturable à semiconducteurs.

8. Dispositif laser selon la revendication 6 ou 7, **caractérisé en ce que** l'absorbeur saturable (15) est un miroir absorbeur qui termine le bras de résonateur (11).

9. Dispositif laser selon l'une des revendications 1 à 8, **caractérisé en ce que** dans le bras de résonateur (11), qui est responsable de la phase de forme d'impulsions (21), est disposé un élément de perte linéaire, par exemple une plaquette λ/4 (13), qui réalise une accumulation élevée d'énergie dans le cristal laser (3).

10. Dispositif laser selon l'une des revendications 2 à 9, **caractérisé en ce que** l'unité de pompage (2) est une unité de pompage à diode à mode continu et forme conjointement avec le dispositif de rotation de polarisation (8), une partie de résonateur (20) commune aux deux bras de résonateur (11,12).

11. Dispositif laser selon l'une des revendications 2 à 10, **caractérisé en ce que** l'unité de pompage (2) est pompée par une lampe ou par un laser et forme, conjointement avec le dispositif de rotation de polarisation (8), une partie de résonateur (20) commune aux deux bras de résonateur (11,12).
